# EUROPEAN PATENT SPECIFICATION

(11) **EP 3 690 232 B1**
(45) Date of publication and mention of the grant of the patent: **04.01.2023**
(21) Application number: 19154791.8
(22) Date of filing: 31.01.2019
(51) Int. Cl.: F03D 1/06

(54) **HUB FOR A WIND TURBINE, WIND TURBINE AND METHOD FOR UP-GRADING A HUB OF A WIND TURBINE**
NABE FÜR EINE WINDTURBINE, WINDTURBINE UND VERFAHREN ZUM NACHRÜSTEN EINER NABE EINER WINDTURBINE
MOYEU POUR UNE ÉOLIENNE, ÉOLIENNE ET PROCÉDÉ DE MISE À NIVEAU DU MOYEU D'UNE ÉOLIENNE

(43) Date of publication of application: 05.08.2020
(73) Proprietor: Siemens Gamesa Renewable Energy A/S, 7330 Brande (DK)
(72) Inventor: Chernobilsky, Nicolas, 7100 Vejle (DK); Laursen, Christian, 8722 Hedensted (DK)
(74) Representative: SGRE-Association

(56) References cited:
- EP-A1- 2 837 820
- EP-A2- 2 516 845
- EP-B1- 2 516 845
- WO-A2-01/42647
- DE-U1-202004 003 521
- US-A1- 2014 377 072

## Description

The present invention relates to a hub for a wind turbine, a wind turbine with such a hub and a method for upgrading a hub of a wind turbine.

For increasing the power output and the efficiency of wind turbines, sizes of rotors are increased. This requires that the dimensions of a hub of the rotor and/or the main bearing is increased in order to provide sufficient stability and longevity of the wind turbine.

However, as the size of the rotor increases the mechanical stress during operation of the wind turbine is also increased. This can lead to dynamic deformations of a hub body and might induce compression variations around a circumference of the main bearing. This can reduce the service life of the main bearing, leading to high servicing costs and unplanned production downtimes. Prior art examples are disclosed in EP2516845A2, EP2837820A1 and DE202004003521U1.

It is one object of the present invention to provide an improved hub for a wind turbine.

According to a first aspect, a hub for a wind turbine according to claim 1 is provided.

This hub has the advantage that a stiffness (or a rigidity) of the hub body can be increased close to the main bearing flange. For example, a stress on a specific position in a main bearing mounted to the main bearing flange can vary due to static and/or dynamic loads. By increasing the stiffness of the hub body, the stress is distributed more evenly and the variation of the load can be reduced significantly. Thus, a service life of a main bearing mounted to the main bearing flange can be increased significantly, leading to longer operation times, reduced servicing costs and increased efficiency of the wind turbine.

Further, a material thickness of the hub body can be reduced without loss of stiffness, which allows to reduce the material needed for the hub body, reducing the cost. Alternatively, the stiffness may be increased without increasing the material thickness of the hub body, allowing higher loads.

The stiffness or rigidity of the hub body as used herein denotes a resistance of the hub body against deformations due to mechanical stress or strain or a load applied during use of the hub in a wind turbine. Higher stiffness leads to smaller deformations at a given stress, which is desirable.

For example, the hub body has a large main bearing flange configured for mounting the main bearing. Further, the hub body has at least two blade bearing flanges for mounting blade bearings which allow to adjust a blade angle with respect to the wind (pitch). A rotational symmetry axis of the blade bearing flanges are, for example, arranged essentially orthogonal to a rotational symmetry axis of the main bearing flange. This does not exclude small deviations, up to 20°, from an orthogonal arrangement. Thus, blades mounted to the hub are pointing in an essentially outward radial direction with respect to the rotational symmetry axis of the main bearing flange.

It is preferred that the stiffness of the hub body is equal at any two positions around the circumference of the main bearing flange in order to reduce load variations in the main bearing during operation.

According to an embodiment, the stiffening structure comprises a rib formed integrally with the hub body.

A rib is a relatively simple way of increasing the stiffness of a structure, such as the hub body. Preferably, the rib is formed during manufacture of the hub body, for example during casting or machining of the hub body. Forming the rib integrally with the hub body ensures a direct force transmission.

According to the invention, the hub body comprises a second portion, the second portion being arranged adjacent to the main bearing flange and between the first blade bearing flange and the second blade bearing flange, wherein at least the first blade bearing flange or the second blade bearing flange is arranged between the first portion and the second portion, wherein the stiffening structure connects the first portion and the second portion.

For example, a hub body having two blade bearing flanges arranged on opposite sides of the hub body across the main bearing flange has two portions with a relatively low stiffness, which are arranged between the two blade bearing flanges and are facing each other across the main bearing flange, the first portion and the second portion. In this embodiment, the stiffening structure connects the first portion and the second portion, such that a force acting on the first portion is transferred via the stiffening structure to the second portion and vice versa. Thus, the first portion and the second portion support each other, increasing their stiffness.

According to the invention, the stiffening structure spans from the first portion to the second portion such that an opening is formed between the stiffening structure and the hub body.

This embodiment has the advantage that access to the main bearing flange through the opening is possible even with the stiffening structure installed in or mounted to the hub body, which simplifies use of the hub.

For example, the stiffening structure comprises a strut, a spoke and/or a similar structure that is configured for transferring both compressive and tensile forces. In further embodiments, the stiffening structure comprises a mesh or lattice structure. Preferably, a geometry of the stiffening structure is optimized as a function of a direction of the forces or local stresses and strains that are expected to occur during operation of the wind turbine and that are to be transferred by the stiffening structure. For this, mechanical simulation tools, such as finite element simulations, may be employed.

The stiffening structure may be made from material comprising steel, aluminum, casted iron, composite material, and/or fiber material, in particular carbon fiber. Further, the stiffening structure may comprise a porous material and may have an internal structure such as bone or wood.

According to a further embodiment, the hub body comprises a third blade bearing flange and a third portion, the third portion being arranged adjacent to the main bearing flange and between the first blade bearing flange and the third blade bearing flange. At least one of the first, second or third blade bearing flanges is arranged between the first portion and the third portion and at least one other of the first, second or third blade bearing flanges is arranged between the second portion and the third portion. The stiffening structure has a Y-shape connected to the hub at the first, second and third portion.

In particular, a first end of the Y-shaped stiffening structure is connected to the first portion, a second end of the Y-shaped stiffening structure is connected to the second portion and a third end of the Y-shaped stiffening structure is connected to the third portion. Preferably, the Y-shape has point symmetry. It is to be understood that the term Y-shape is not limiting the form of the stiffening structure to star shape having three spikes. Rather, forms having a shape of a plus-sign or shapes which have four or more spikes are also encompassed by this terminology. Further, the connecting legs may have a curved shape and do not necessarily follow a straight line.

Specifically, a Y-shape is suitable in embodiments where the hub body has three blade bearing flanges and is configured for being employed in a wind turbine having three blades.

It becomes evident that the number of portions such as the first, second or third portion as described is equal to the number of implemented blade bearing flanges. The blade bearing flanges are preferably arranged on the hub body in a regular manner, such that their centers define a circle that has a center arranged on the rotational symmetry axis of the main bearing flange and an angle between the centers of two neighboring blade bearing flanges is given by 360° divided by the number of blade bearing flanges. Then, one such portion is arranged between each two neighboring blade bearing flanges, close to the main bearing flange.

According to a further embodiment, the stiffening structure is arranged inside the hub body.

The hub body, which may also be referred to as a housing, may house many further elements of the wind turbine not mentioned herein.

According to the invention, the stiffening structure comprises at least two reinforcing elements joined to each other.

This embodiment is preferred because it allows to use a number of smaller reinforcing elements, which can be less complex and which can be manufactured, handled and installed easier than one large stiffening structure, such as a Y-shaped plate. By joining the reinforcing elements to each other, a rigidity of the stiffening structure is increased.

The reinforcing elements may be made from material comprising steel, composite material, and/or fiber material, in particular carbon fiber. Further, the reinforcing elements may comprise a porous material and may have an internal structure such as bone or wood.

Preferably, the reinforcing elements are bolted to the hub body in the first, second and/or third portion of the hub body.

The two reinforcing elements may be joined to each other by using an additional plate bolted (or joined in a different manner, such as welding or gluing) to each of the reinforcing elements. Further, the reinforcing elements may be joined by welding, soldering, and/or gluing. Also, clips and/or brackets may be used for joining.

According to a further embodiment, the stiffening structure comprises at least one man hole.

This embodiment has the advantage that service operations on the main bearing flange can be performed without the need to remove or dismount the stiffening structure.

For example, in embodiments where the stiffening structure has a Y-shape, the man hole may be arranged centrally on a symmetry axis of the main bearing flange. Preferably, the Y-shape is designed such that it has point symmetry, and the man hole is arranged on the symmetry axis of the Y-shape.

In embodiments, the hub body has three blade bearing flanges and the stiffening structure comprises three identical reinforcing elements having a curved shape, for example an essentially circular arc of 90° to 120°. A first reinforcing element spans from the first portion to the second portion. A second reinforcing element spans from the second portion to the third portion. And a third reinforcing element spans from the third portion to the first portion. Further, the first reinforcing element is joined to the second reinforcing element at a common position close to the second portion. The second reinforcing element is joined to the third reinforcing element at a common position close to the third portion. And the third reinforcing element is joined to the first reinforcing element at a common position close to the first portion. The three reinforcing elements arranged as described may resemble a Y-shape.

According to a further embodiment, the main bearing flange has a diameter of at least two meters.

The larger the diameter of the main bearing flange, the more important it is to equalize of the stiffness of the hub body around the circumference of the main bearing flange.

According to a further embodiment, the hub body is made from cast iron.

According to a second aspect, a wind turbine comprising a hub according to the first aspect is suggested.

This wind turbine has the advantage that a service life of the main bearing of the hub may be increased.

According to an embodiment, the wind turbine is implemented as a direct drive wind turbine.

Direct drive wind turbines can benefit from the increased stiffness provided by the hub in particular, because a massive shaft that provides high stiffness may be omitted.

According to a third aspect, a method for upgrading a hub of a wind turbine according to claim 10 is suggested.

This method has the advantage that existing wind turbines and/or hubs that are already produced may be equipped or fitted with the stiffening structure, such that the benefits described in accordance with the first aspect may be obtained. Of course, all embodiments described in accordance with the first aspect apply mutatis mutandis to the third aspect.

Any embodiment of the first aspect may be combined with any embodiment of the first aspect to obtain another embodiment of the first aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic view of a first example of a hub;
- Fig. 2: shows a schematic view of a second example of a hub, not forming part of the invention;
- Fig. 3: shows a schematic view of a third example of a hub; and
- Fig. 4: shows a schematic view of an example of a wind turbine.

In the Figures, like reference numerals designate like or functionally equivalent elements, unless otherwise indicated.

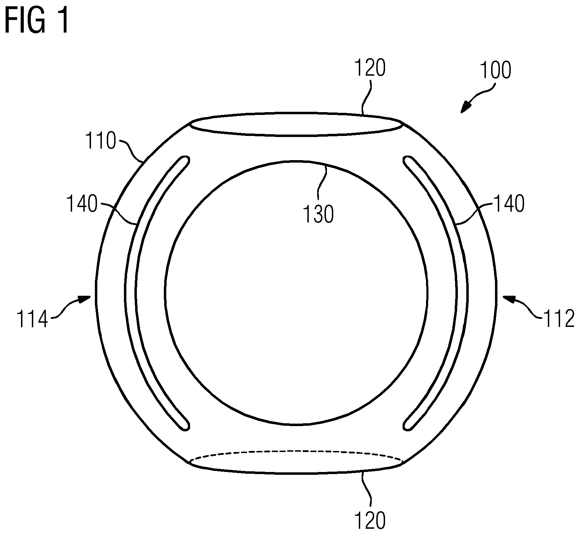

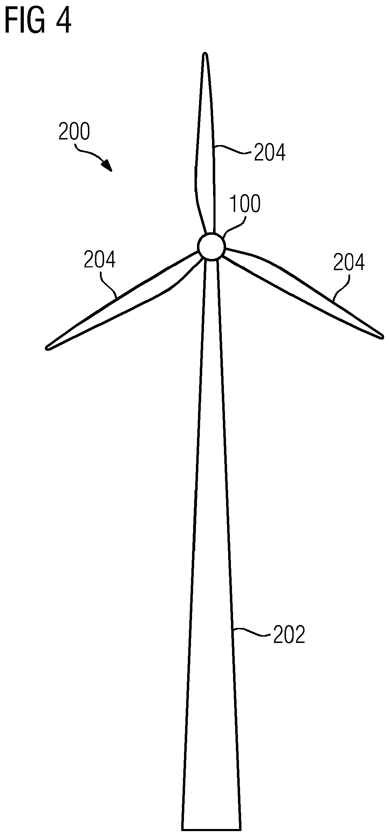

Fig. 1 shows a schematic view of a first example of a hub 100 for a wind turbine 200 (see Fig. 4). In this first example, the hub 100 has a hub body 110 with a first blade bearing flange 120, a second blade bearing flange 120 and one main bearing flange 130. Thus, this hub 100 is configured for carrying two blades 204 (see Fig. 4).

For example, the main bearing flange 130 has a diameter of 4.5 m and the first and second blade bearing flanges 120 each have a diameter of 4 m. For example, the hub body 110 is made from cast iron. In order to provide a sufficient stiffness or rigidity of the hub 100, particularly close to the main bearing flange 130, without massively increasing a material thickness of the hub body 110, two stiffening structures 140 are provided. In this example, the stiffening structures 140 are implemented integrally as a rib in the hub body 110. The ribs 140 are arranged at positions of the hub body 110 in a first portion 112 and in a second portion 114. Both the first portion 112 and the second portion 114 are arranged adjacent to the main bearing flange 130 and between the first blade bearing flange 120 and the second blade bearing 120. The first portion 112 and the second portion 114 are facing each other across the main bearing flange 130.

Implementing the stiffening structures 140 as shown in this example increases the stiffness of the hub body 110 particularly in the first portion 112 and in the second portion 114. Thus, the stiffness around a circumference of the main bearing flange 130 can be equalized or levelled this way. Therefore, a main bearing (not shown) can have an increased service life compared to the case where no such stiffening structures 140 are used.

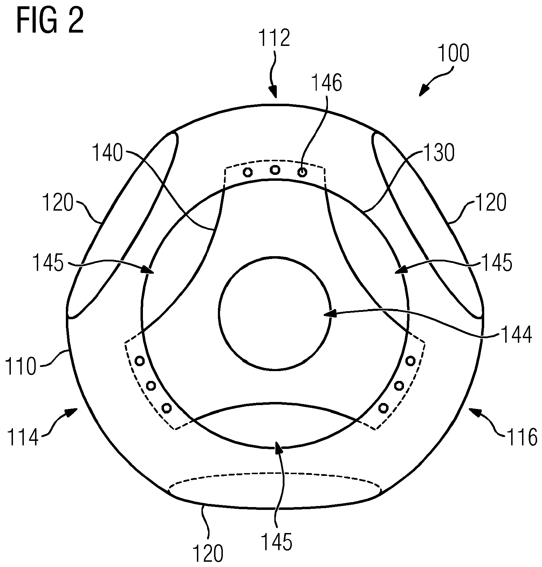

Fig. 2 shows a schematic view of a second example of a hub 100 for a wind turbine 200 (see Fig. 4), not forming part of the invention. The hub 100 has a hub body 110 with one main bearing flange 130 and three blade bearing flanges 120, a first, a second and a third blade bearing flange 120. The blade bearing flanges 120 are arranged symmetrically around a rotational symmetry axis of the main bearing flange 130. The hub body 110 has three portions 112, 114, 116 having a relatively low stiffness. For example, the first portion 112 is arranged between the first blade bearing flange 120 and the second blade bearing flange 120, the second portion 114 is arranged between the second blade bearing flange 120 and the third blade bearing flange 120, and the third portion 116 is arranged between the third blade bearing flange 120 and the first blade bearing flange 120. Further, each of the first, second and third portion 112, 114, 116 is arranged adjacent to the main bearing flange 130. In order to increase the stiffness of these portions 112, 114, 116 and to equalize the stiffness on a circumference around the main bearing flange 130, a stiffening structure 140 is arranged in the hub body 110. Here, the stiffening structure 140 consists of a Y-shaped plate made from steel. The shape may also be described as an equilateral triangle form with each side being curved towards a symmetry point of the triangle. By using this shape, three openings 145 are formed between the plate 140 and the hub body 110, through which the main bearing flange 130 or a main bearing mounted there can be accessed. The plate 140 further has a centrally arranged man hole 144, which reduces the weight of the plate 140 and allows further access to the inside of the hub body 110 for servicing.

In this example, the plate 140 is bolted to the hub body 110 using a number of bolts 146 (only one bolt 146 is designated with a reference numeral for better overview). The plate 140 may comprise a specific bolting section (not shown) and the hub body 110 may comprise a corresponding specific bolting section (not shown) for bolting the plate 140 to the hub body 110. The plate 140 connects and spans between the first, second and third portion 112, 114, 116 of the hub body 110. Thus, a stress or strain that acts or is applied to one of the first, second or third portion 112, 114, 116 will alike act on the plate 140 and be transferred by the plate 140 to the respective other two portions. Therefore, the hub body 110 cannot be deformed in the first portion 112, second portion 114 or third portion 116 individually, but only by involving the respective other portions.

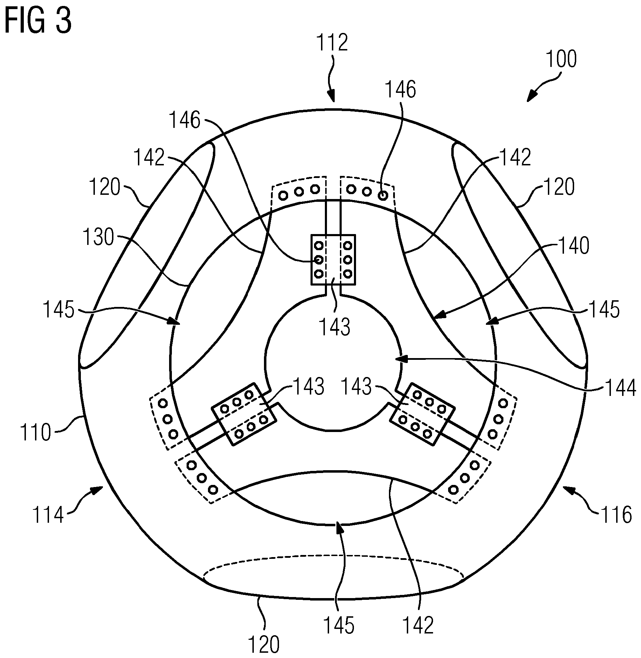

Fig. 3 shows a schematic view of a third example of a hub 100 for a wind turbine 200 (see Fig. 4). The hub 100 comprises a hub body 110 which is similar to the hub body 110 of the hub 100 described with reference to Fig. 2. However, in this example, the stiffening structure 140 comprises three reinforcing elements 142. The reinforcing elements 142 each have the same shape. The reinforcing elements 142 are made from a composite material which has a very high stiffness-to-weight ratio, such that the reinforcing elements 142 are relatively light but can still transfer high tensile or compressive forces. Each one of the reinforcing elements 142 spans between and connects two of the first portion 112, second portion 114 or third portion 116. The reinforcing elements 142 are fixed to the hub body 110 at the respective positions by using bolts 146. Using these smaller reinforcing elements 142 makes it a lot easier to install them and mount them to the hub body 110.

Further, in order to increase the stiffness gain obtained by using the reinforcing elements 142, each two reinforcing elements 142 are joined with each other in a neighboring section. In this example, the reinforcing elements 142 are joined by means of joining plates 143, which are bolted by bolts 146 (only one bolt 146 is designated with a reference numeral) to the respective reinforcing element 142. This allows transfer of tensile or compressive forces between the reinforcing elements 142.

Together, the three reinforcing elements 142 form a shape that is similar to the Y-shaped plate 140 described with reference to Fig. 2.

The reinforcing elements 142 may have shapes that are different to what is shown in this example, such as rod-like, formed as a strut or spoke or the like.

Fig. 4 shows a schematic view of an example of a wind turbine 200. The wind turbine 200 comprises a tower 202 on which a rotor comprising a hub 100 and three blades 204 is arranged. For example, the hub 100 has the features of the hub 100 described with reference to Fig. 2 or Fig. 3. The wind turbine 200 is implemented as a direct drive wind turbine. For example, the rotor of the wind turbine 200 has a diameter of over 100 m. However, by using the hub 100 as described before, larger diameters can be realized easily because the hub body's 110 (see Figs. 1 - 3) stiffness may be increased selectively in portions that have a relatively low stiffness by using a stiffening structure 140. The wind turbine 200 may be used both on-shore as well as off-shore.

## Claims

1. A hub (100) for a wind turbine (200), comprising:
a hub body (110) having a first blade bearing flange (120), a second blade bearing flange (120) and a main bearing flange (130), wherein a first portion (112) of the hub body (110) is arranged adjacent to the main bearing flange (130) and between the first blade bearing flange (120) and the second blade bearing flange (120) and a second portion (114) of the hub body (110) is arranged adjacent to the main bearing flange (130) and between the first blade bearing flange (120) and the second blade bearing flange (120), wherein the first blade bearing flange (120) or the second blade bearing flange (120) is arranged between the first portion (112) and the second portion (114), and
a stiffening structure (140) stiffening the first portion (112) and the second portion (114) of the hub body (110), wherein the stiffening structure (140) connects the first portion (112) and the second portion (114) and spans from the first portion (112) to the second portion (114) such that an opening (145) is formed between the stiffening structure (140) and the hub body (110), and **characterized in that** the stiffening structure (140) comprises at least two reinforcing elements (142) joined to each other.

2. The hub according to claim 1,
wherein the stiffening structure (140) comprises a rib formed integrally with the hub body (110).

3. The hub according to claim 1 or 2,
wherein the hub body (110) comprises a third blade bearing flange (120) and a third portion (116), the third portion (116) being arranged adjacent to the main bearing flange (130) and between the first blade bearing flange (120) and the third blade bearing flange (120), wherein at least one of the first, second or third blade bearing flanges (120) is arranged between the first portion (112) and the third portion (116) and at least one other of the first, second or third blade bearing flanges (120) is arranged between the second portion (114) and the third portion (116), wherein the stiffening structure (140) has a Y-shape connected to the hub body (110) at the first, second and third portion (112, 114, 116) .

4. The hub according to any one of claims 1 to 3,
wherein the stiffening structure (140) is arranged inside the hub body (110).

5. The hub according to any one of claims 1 to 4,
wherein the stiffening structure (140) comprises at least one man hole (144).

6. The hub according to any one of claims 1 to 5,
wherein the main bearing flange (130) has a diameter of at least two meters.

7. The hub according to any one of claims 1 to 6,
wherein the hub body (110) is made from cast iron.

8. A wind turbine (200) comprising a hub (100) according to any one of claims 1 to 7.

9. The wind turbine according to claim 8,
wherein the wind turbine (200) is implemented as a direct drive wind turbine.

10. A method for upgrading a hub (100) of a wind turbine (200), wherein a stiffening structure (140) is joined to a hub body (110) of the hub (100), the hub body (100) comprising a first blade bearing flange (120), a second blade bearing flange (120) and a main bearing flange (130), for stiffening a first portion (112) and a second portion (114) of the hub body (110), wherein the first portion (112) is arranged adjacent to the main bearing flange (130) and between the first blade bearing flange (120) and the second blade bearing flange (120), the second portion (114) is arranged adjacent to the main bearing flange (130) and between the first blade bearing flange (120) and the second blade bearing flange (120), wherein the first blade bearing flange (120) or the second blade bearing flange (120) is arranged between the first portion (112) and the second portion (114), wherein the stiffening structure (140) connects the first portion (112) and the second portion (114) and spans from the first portion (112) to the second portion (114) such that an opening (145) is formed between the stiffening structure (140) and the hub body (110), and wherein the stiffening structure (140) comprises at least two reinforcing elements (142) joined to each other.

## Patentansprüche

1. Nabe (100) für eine Windturbine (200), umfassend:
einen Nabenkörper (110) mit einem ersten Blattlagerflansch (120), einem zweiten Blattlagerflansch (120) und einem Hauptlagerflansch (130), wobei ein erster Abschnitt (112) des Nabenkörpers (110) neben dem Hauptlagerflansch (130) und zwischen dem ersten Blattlagerflansch (120) und dem zweiten Blattlagerflansch (120) angeordnet ist und ein zweiter Abschnitt (114) des Nabenkörpers (110) neben dem Hauptlagerflansch (130) und zwischen dem ersten Blattlagerflansch (120) und dem zweiten Blattlagerflansch (120) angeordnet ist, wobei der erste Blattlagerflansch (120) oder der zweite Blattlagerflansch (120) zwischen dem ersten Abschnitt (112) und dem zweiten Abschnitt (114) angeordnet ist, und
eine Versteifungsstruktur (140), die den ersten Abschnitt (112) und den zweiten Abschnitt (114) des Nabenkörpers (110) versteift, wobei die Versteifungsstruktur (140) den ersten Abschnitt (112) und den zweiten Abschnitt (114) verbindet und sich von dem ersten Abschnitt (112) zu dem zweiten Abschnitt (114) erstreckt, so dass eine Öffnung (145) zwischen der Versteifungsstruktur (140) und dem Nabenkörper (110) gebildet wird, und **dadurch gekennzeichnet, dass**
die Versteifungsstruktur (140) mindestens zwei Verstärkungselemente (142) umfasst, die miteinander verbunden sind.

2. Nabe nach Anspruch 1,
wobei die Versteifungsstruktur (140) eine Rippe umfasst, die integral mit dem Nabenkörper (110) ausgebildet ist.

3. Nabe nach Anspruch 1 oder 2,
wobei der Nabenkörper (110) einen dritte Blattlagerflansch (120) und einen dritten Abschnitt (116) umfasst, wobei der dritte Abschnitt (116) neben dem Hauptlagerflansch (130) und zwischen dem ersten Blattlagerflansch (120) und dem dritten Blattlagerflansch (120) angeordnet ist, wobei mindestens einer von dem ersten, zweiten oder dritten Blattlagerflansch (120) zwischen dem ersten Abschnitt (112) und dem dritten Abschnitt (116) angeordnet ist und mindestens einer von dem ersten, zweiten oder dritten Blattlagerflansch (120) zwischen dem zweiten Abschnitt (114) und dem dritten Abschnitt (116) angeordnet ist, wobei die Versteifungsstruktur (140) eine Y-Form aufweist, die am ersten, zweiten und dritten Abschnitt (112, 114, 116) mit dem Nabenkörper (110) verbunden ist.

4. Nabe nach einem der Ansprüche 1 bis 3,
wobei die Versteifungsstruktur (140) in dem Nabenkörper (110) angeordnet ist.

5. Nabe nach einem der Ansprüche 1 bis 4,
wobei die Versteifungsstruktur (140) mindestens ein Mannloch (144) umfasst.

6. Nabe nach einem der Ansprüche 1 bis 5,
wobei der Hauptlagerflansch (130) einen Durchmesser von mindestens zwei Metern aufweist.

7. Nabe nach einem der Ansprüche 1 bis 6,
wobei der Nabenkörper (110) aus Gusseisen hergestellt ist.

8. Windturbine (200), die eine Nabe (100) nach einem der Ansprüche 1 bis 7 umfasst.

9. Windturbine nach Anspruch 8,
wobei die Windturbine (200) als eine direkt angetriebene Windturbine ist.

10. Verfahren zum Nachrüsten einer Nabe (100) einer Windturbine (200), wobei eine Versteifungsstruktur (140) mit einem Nabenkörper (110) der Nabe (100) verbunden wird, wobei der Nabenkörper (100) einen ersten Blattlagerflansch (120), einen zweiten Blattlagerflansch (120) und einen Hauptlagerflansch (130) umfasst, um einen ersten Abschnitt (112) und einen zweiten Abschnitt (114) des Nabenkörpers (110) zu versteifen, wobei der erste Abschnitt (112) neben dem Hauptlagerflansch (130) und zwischen dem ersten Blattlagerflansch (120) und dem zweiten Blattlagerflansch (120) angeordnet ist, der zweite Abschnitt (114) neben dem Hauptlagerflansch (130) und zwischen dem ersten Blattlagerflansch (120) und dem zweiten Blattlagerflansch (120) angeordnet ist, wobei der erste Blattlagerflansch (120) oder der zweite Blattlagerflansch (120) zwischen dem ersten Abschnitt (112) und dem zweiten Abschnitt (114) angeordnet ist, wobei die Versteifungsstruktur (140) den ersten Abschnitt (112) und den zweiten Abschnitt (114) verbindet und sich von dem ersten Abschnitt (112) zu dem zweiten Abschnitt (114) erstreckt, so dass eine Öffnung (145) zwischen der Versteifungsstruktur (140) und dem Nabenkörper (110) gebildet wird, und wobei die Versteifungsstruktur (140) mindestens zwei Verstärkungselemente (142) umfasst, die miteinander verbunden sind.

## Revendications

1. Moyeu (100) pour une éolienne (200), comprenant :
un corps de moyeu (110) comprenant une première bride porteuse de pale (120), une deuxième bride porteuse de pale (120) et une bride porteuse principale (130), dans lequel une première partie (112) du corps de moyeu (110) est disposée adjacente à la bride porteuse principale (130) et entre la première bride porteuse de pale (120) et la deuxième bride porteuse de pale (120), et une deuxième partie (114) du corps de moyeu (110) est disposée adjacente à la bride porteuse principale (130) et entre la première bride porteuse de pale (120) et la deuxième bride porteuse de pale (120), dans lequel la première bride porteuse de pale (120) ou la deuxième bride porteuse de pale (120) est disposée entre la première partie (112) et la deuxième partie (114), et une structure de renfort (140) renforçant la première partie (112) et la deuxième partie (114) du corps de moyeu (110), dans lequel la structure de renfort (140) raccorde la première partie (112) et la deuxième partie (114) et s'étend depuis la première partie (112) jusqu'à la deuxième partie (114) de sorte qu'une ouverture (145) soit formée entre la structure de renfort (140) et le corps de moyeu (110), et **caractérisé en ce que** la structure de renfort (140) comprend au moins deux éléments de renfort (142) joints l'un à l'autre.

2. Moyeu selon la revendication 1, dans lequel la structure de renfort (140) comprend une nervure partie intégrante du corps de moyeu (110).

3. Moyeu selon la revendication 1 ou 2, dans lequel le corps de moyeu (110) comprend une troisième bride porteuse de pale (120) et une troisième partie (116), la troisième partie (116) étant disposée adjacente à la bride porteuse principale (130) et entre la première bride porteuse de pale (120) et la troisième bride porteuse de pale (120), dans lequel au moins une parmi la première, la deuxième ou la troisième bride porteuse de pale (120) est disposée entre la première partie (112) et la troisième partie (116), et au moins une autre parmi la première, la deuxième ou la troisième bride porteuse de pale (120) est disposée entre la deuxième partie (114) et la troisième partie (116), dans lequel la structure de renfort (140) a une forme en Y raccordée au corps de moyeu (110) au niveau de la première, de la deuxième et de la troisième partie (112, 114, 116).

4. Moyeu selon l'une quelconque des revendications 1 à 3, dans lequel la structure de renfort (140) est disposée à l'intérieur du corps de moyeu (110).

5. Moyeu selon l'une quelconque des revendications 1 à 4, dans lequel la structure de renfort (140) comprend au moins un regard (144).

6. Moyeu selon l'une quelconque des revendications 1 à 5, dans lequel la bride porteuse principale (130) a un diamètre d'au moins deux mètres.

7. Moyeu selon l'une quelconque des revendications 1 à 6, dans lequel le corps de moyeu (110) est en fonte.

8. Éolienne (200) comprenant un moyeu (100) selon l'une quelconque des revendications 1 à 7.

9. Éolienne selon la revendication 8, dans laquelle l'éolienne (200) est mise en œuvre en tant qu'éolienne à transmission directe.

10. Procédé d'amélioration d'un moyeu (100) d'une éolienne (200), dans lequel une structure de renfort (140) est jointe au corps de moyeu (110) du moyeu (100), le corps de moyeu (100) comprenant une première bride porteuse de pale (120), une deuxième bride porteuse de pale (120) et une bride porteuse principale (130), pour renforcer une première partie (112) et une deuxième partie (114) du corps de moyeu (110), dans lequel la première partie (112) est disposée adjacente à la bride porteuse principale (130) et entre la première bride porteuse de pale (120) et la deuxième bride porteuse de pale (120), la deuxième partie (114) est disposée adjacente à la bride porteuse principale (130) et entre la première bride porteuse de pale (120) et la deuxième bride porteuse de pale (120), dans lequel la première bride porteuse de pale (120) ou la deuxième bride porteuse de pale (120) est disposée entre la première partie (112) et la deuxième partie (114), dans lequel la structure de renfort (140) raccorde la première partie (112) et la deuxième partie (114) et s'étend depuis la première partie (112) jusqu'à la deuxième partie (114) de sorte qu'une ouverture (145) soit formée entre la structure de renfort (140) et le corps de moyeu (110), et dans lequel la structure de renfort (140) comprend au moins deux éléments de renfort (142) joints l'un à l'autre.
